(19) Europäisches Patentamt
European Patent Office
Office européen des brevets

(11) Numéro de publication: **0 237 375**
**A2**

(12) # DEMANDE DE BREVET EUROPEEN

(21) Numéro de dépôt: **87400249.6**

(22) Date de dépôt: **03.02.87**

(51) Int. Cl.⁴: **C 09 J 3/14**
C 08 L 23/08, C 08 L 33/14,
C 08 K 5/09, C 08 K 5/56,
C 08 K 5/57

(30) Priorité: **12.02.86 FR 8601916**
**08.07.86 FR 8609929**

(43) Date de publication de la demande:
**16.09.87 Bulletin 87/38**

(84) Etats contractants désignés:
**BE CH DE FR GB IT LI LU NL SE**

(71) Demandeur: **ATOCHEM**
**4 & 8, Cours Michelet La Défense 10**
**F-92800 Puteaux (FR)**

(72) Inventeur: **Boutillier, Jacques**
**Carsix**
**F-27300 Bernay (FR)**

**Nawrot, Serge**
**Rue Marceau Boulay**
**F-27470 Serquigny (FR)**

(74) Mandataire: **Foiret, Claude et al**
**ATOCHEM Département Propriété Industrielle**
**F-92091 Paris la Défense 10 Cédex 42 (FR)**

(54) **Compositions adhésives à base de copolymère d'éthylene et d'ester d'hydroxyalkyle ou d'ester d'époxyalkyle.**

(57) Compositions adhésive à base de copolymère d'éthylène et d'ester d'hydroxyalkyle ou d'ester d'époxyalkyle caractérisée en ce qu'elle contient un composé organométallique de plomb, d'étain ou de titane.

EP 0 237 375 A2

## Description

### COMPOSITIONS ADHESIVES A BASE DE COPOLYMERE D'ETHYLENE ET D'ESTER D'HYDROXYALKYLE OU D'ESTER D'EPOXYALKYLE

La présente invention concerne des compositions adhésives à base de copolymères d'éthylène et d'ester d'hydroxylalkyle ou d'ester d'époxyalkyle contenant un composé organométallique.

Les propriétés adhésives des compositions à base de copolymère d'éthylène et d'un ester d'un acide carboxylique à insaturation éthylénique, ou de terpolymères d'éthylène, d'un ester d'un acide carboxylique à insaturation éthylénique et d'acide caroxylique ou d'ester à insaturation éthylénique sont connues.

Selon l'invention, ces propriétés sont nettement améliorées, en particulier dans leur tenue à chaud, lorsqu'on leur ajoute de faibles quantités de composés organométalliques de plomb, d'étain ou de titane.

Les copolymères éthylène-ester d'hydroxyalkyle ou ester d'époxyalkyle, entrant dans les compositions adhésives selon l'invention, résultent de la copolymérisation d'environ 60 pour cent à environ 99,5 pour cent en poids d'éthylène ou de mélange d'éthylène avec un autre monomère polymérisable éthyléniquement insaturé et d'envrion 0,5 pour cent à environ 40 pour cent en poids d'un ester d'hydroxyalkyle ou d'un ester d'époxyalkyle d'un acide alpha, béta-éthyléniquement insaturé de formule :

$$Y - \overset{\overset{H}{|}}{C} = \overset{\overset{R}{|}}{C} - X$$

dans laquelle R est l'hydrogène ou un groupe méthyl
X est un groupement -

$$COO -(CHR')_m-(CH_2)_n-Z,$$

Z étant OH ou

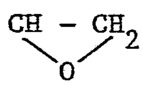

m étant un nombre entier de 0 à 5
n étant un nombre entier de 1 à 6
sachant que m + n est un nombre de 1 à 6, de préférence de 2 à 6 quand Z est OH
R' étant un radical hydrocarboné, éventuellement halogéné,
Y est l'hydrogène, X ou - COO - $CH_2$ - R', X et R' étant définis comme ci-dessus

De façon habituelle R' comprend l'hydrogène et les radicaux organiques contenant jusqu'à 8 atomes de carbone, sans toutefois exclure ceux en contenant un plus grand nombre si désiré. Parmi ces radicaux on peut citer le méthyle, éthyle, propyle, butyle, 2 éthylhexyle, cyclohexyle, phényle, tolyle, éthylphényle ainsi que ces mêmes radicaux possédant au moins un halogène substitué, plus particulièrement le chlore.

Par ester d'hydroxyalkyle et ester d'époxyalkyle on entend les esters possédant les groupements hydroxyalkyle ou époxyalkyle

$-(CHR')_m-(CH_2)_n-OH$ ou 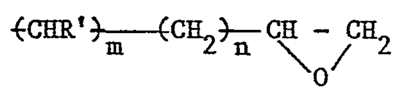

R', m et n étant définis comme précédemment.

Les esters d'hydroxyalkyle ou les esters d'époxyalkyle des acides éthyléniquement insaturés comprennent les esters hydroxyalkylés ou les esters époxyalkylés des acides monocarboxyliques et dicarboxyliques tels l'acide acrylique, les acides acryliques alpha substitués plus particulièrement l'acide méthacrylique, l'acide maléique et l'acide fumarique.

Comme monomère polymérisable éthyléniquement insaturé qui peut être associé à l'éthylène, jusque dans un rapport en poids de 1/1 on peut choisir par exemple parmi : les alpha oléfines ; les composés aromatiques comme les stryréniques ; les acrylates d'alkyles comme l'acrylate d'éthyle, l'acrylate de n-butyle et l'acrylate de 2-éthylhexyle ; les méthacrylates d'alkyles ; les nitriles acryliques et méthacryliques ; les esters maléiques comme le maléate de diéthyle ; les esters fumariques ; les esters d'alcools insaturés comme l'acétate de vinyle.

Selon l'objet de l'invention, ces copolymères, préparés par exemple selon la technique décrite dans le brevet des Etats Unis d'Amérique 3 300 452 sont associés à un composé organométallique de plomb, d'étain ou de titane. Ces composés organométalliques sont favorablement choisis parmi les sels d'acides organiques et plus particulièrement parmi les sels des acides organiques contenant jusqu'à 25 atomes de carbone dans leur molécule et mieux jusqu'à 20 atomes, les composés organométalliques de bas poids moléculaire ou

facilement migrants, tels par exemple les composés liquides, étant les mieux adaptés, l'une de leurs caractéristiques étant une répartition plus facile et plus homogène dans le copolymère.

Parmi les composés organométalliques de plomb et d'étain convenant plus particulièrement on peut citer les sels des acides de $C_2$ à $C_{13}$ comme le diacétate et le dilaurate de dibutylétain, l'octoate de plomb, les stéarates de plomb et d'étain ; les mercaptides comme les thioglycolates d'alkylétain et les mercaptoacétates d'alkylétain ; les sulfures comme les sulfures d'étain alkylés ; les carboxylates.

Parmi les composés du titane sont particulièrement recommandés les composés de formule générale Ti $(OR)_4$ dans laquelle les radicaux R, identiques ou différents, représentent l'hydrogène ou un radical hydrocarboné, contenant de 1 à 18 et mieux de 1 à 14 atomes de carbone. Ces radicaux R sont de préférence : alkyles, aryles, alkylaryles ou cycloaliphatiques.

Des quantités de 0,05 à 5, et mieux de 0,5 à 2, pour cent en poids de composé organométallique par rapport au copolymère éthylène-ester d'hydroxyalkyle ou ester d'époxyalkyle conviennent dans ces compositions adhésives qui sont habituellement mises en oeuvre à des températures généralement comprises entre la température ambiante, environ 20°C, et 300°C. Les compositions adhésives, à tenue améliorée, particulièrement recommandées, sont préparées à partir de copolymères à base d'éthylène, y compris en mélange avec au moins un autre monomère polymérisable éthyléniquement insaturé tel que par exemple l'acétate de vinyle ou l'acrylate d'éthyle, et d'acrylate ou méthacrylate d'hydroxyalkyle ou d'époxyalkyle. Comme dans le cas général ces copolymères peuvent contenir de 0,5 à 40 pour cent en poids de produit de polymérisation de l'acrylate ou du méthacrylate hydroxylé ou époxydé.

La composition adhésive est préparée et mise en oeuvre, de façon habituelle, par mélange de façon homogène du copolymère à l'état fondu avec le composé organométallique puis déposée entre les substrats à faire adhérer avant de placer l'ensemble sous pression, de 0,05 à 0,5 MPa convient, à chaud, habituellement de 150 à 250°C pendant 1 à 60 minutes environ.

Toutefois le copolymère se trouvant sous forme solide tel que film, granulé, poudre, peut être mis en contact directement avec le composé organométallique en même temps qu'avec les substrats à faire adhérer, ou, par empatage préalable à température ambiante.

Ces compositions possèdent de bonnes propriétés adhésives sur des supports tels que métaux, verre et caoutchoucs.

Les essais de l'exemple suivant illustrent l'invention sans la limiter.

EXEMPLE

L'évaluation des propriétés adhésives est effectuée soit selon la méthode de pelage en T, norme ASTM D 1876, soit selon la méthode de pelage à 180°, norme ASTM D 903 sur des échantillons préparés comme suit.

Le copolymère est malaxé, dans un plastographe BRABENDER à cylindre de type 50 de contenance volumique égale à 60 cm $^3$ environ, avec le composé organométallique pendant 5 minutes à 130°C.

Le mélange est déposé entre les deux substrats à faire adhérer, l'ensemble étant ensuite place sous une pression de 0,1 MPa pendant cinq minutes à 200°C sauf pour l'essai 12 ou le temps est de une minute.

La composition adhésive et les résultats obtenus sont donnés dans les tableaux suivants.

Les essais 1, 3, 5, 7, 13, 15, 17, 19, 23, 25, 27, 29 et 31 sont donnés à titre comparatif.

TABLEAU 1

SUBSTRATS : ALUMINIUM

| ESSAIS | | | RESISTANCE AU PELAGE : Norme ASTM D 1876 (daN/cm) | | |
|---|---|---|---|---|---|
| | Composition adhésive | Rapport des monomères en % poids | à 20°C | à 60°C | à 80°C |
| 1 | E/HEMA | (95/5) | 0,3 | 0,1 | 0 |
| 2 | E/HEMA + 1 % MBDSn | (95/5) | 0,4 | 0,4 | 0,3 |
| 3 | E/EA/HEA | (88/10/2) | 0,5 | 0 | 0 |
| 4 | E/EA/HEA + 1 % MDBSn | (88/10/2) | 0,3 | 0,4 | 0,7 |
| 5 | E/VA/HEA | (72/18/10) | 0,7 | 0,2 | 0 |
| 6 | E/VA/HEA + 0,5 % MDBSn | (72/18/10) | 3,6 | 0,9 | 0,2 |
| 7 | E/VA/HEA | (73/22/5) | 3,6 | 0,7 | 0,1 |
| 8 | E/VA/HEA + 0,5 MDBSn | (73/22/5) | 4,9 | 2,1 | 0,4 |
| 9 | E/VA/HEA + 1 % DADBSn | (73/22/5) | 2,0 | 2,0 | 1,0 |
| 10 | E/VA/HEA + 1 % DLDBSn | (73/22/5) | 5,2 | 2,3 | 0,2 |
| 11 | E/VA/HEA + 1 % DB 30 | (73/22/5) | 0,5 | 0,5 | 0,6 |
| 12 | E/VA/HEA + 1 % $Ti(OPr)_4$ | (73/22/5) | 5,9 | 1,3 | 0,1 |

TABLEAU 2

| ESSAIS | | RESISTANCE AU PELAGE : Norme ASTM D 903 (daN/cm) | | |
|---|---|---|---|---|
| Composition adhésive | Rapport des monomères en % poids | à 20°C | à 60°C | à 80°C |
| SUBSTRAT : Verre | | | | |
| 13 E/VA/HEA | (73/22/5) | 4,2 | 1,0 | 0,1 |
| 14 E/VA/HEA + 0,5 % MDBSn | (73/22/5) | 5,0 | 4,5 | 0,9 |
| SUBSTRAT : Tôle peinte | | | | |
| 15 E/VA/HEA | (73/22/5) | 3,8 | 1,1 | 0,2 |
| 16 E/VA/HEA + 0,5 % MDBSn | (73/22/5) | 5,6 | 2,4 | 0,5 |

E/HEMA : Copolymère éthylène/hydroxyéthyl méthacrylate

E/EA/HEA : Terpolymère éthylène/éthyl acrylate/hydroxy éthyl acrylate

E/VA/HEA : Terpolymère éthylène/vinyl acétate/hydroxy éthyl acrylate

MDBSn : Maléate de dibutyle étain

$Ti(OPr)_4$ : Tétraisopropyle d'orthotitanate

DLDBSn : Dilaurate de dibutyle étain

DADBSn : Diacétate de dibutyle étain

DB 30 : Stéarate de plomb dibasique

TABLEAU 3

SUBSTRATS : ALUMINIUM

| ESSAIS | | RESISTANCE AU PELAGE : Norme ASTM D 1876 (daN/cm) | | |
|---|---|---|---|---|
| Composition adhésive | Rapport des monomères en % poids | à 20°C | à 60°C | à 80°C |
| 17 E/GMA | 85/15 | 1,6 | 0,6 | 0,4 |
| 18 E/GMA + 0,5 % MBDSn | 85/15 | 4,8 | 4,5 | 3,3 |
| 19 E/VA/GMA | 68/27/5 | 4,4 | 0,6 | 0 |
| 20 E/VA/GMA + 0,5 % MDBSn | 68/27/5 | 3,6 | 1,1 | 0,2 |
| 21 E/VA/GMA + 0,5 % DB30 | 68/27/5 | 1,6 | 0,9 | 0,3 |
| 22 E/VA/GMA + 0,5 % DLDBSn | 68/27/5 | 3,8 | 1,5 | 0,3 |
| 23 E/VA/GMA | 90/5/5 | 2,2 | 1,3 | 0,6 |
| 24 E/VA/GMA + 0,5 MDBSn | 90/5/5 | 3,8 | 2,5 | 3,0 |

E/GMA Copolymère Ethylène/glycidyle méthacrylate
E/VA/GMA Terpolymère Ethylène/vinyle acétate/glycidyle méthacrylate

# T A B L E A U 4

| ESSAIS | | RESISTANCE AU PELAGE : Norme ASTM D 903 (daN/cm) | | |
|---|---|---|---|---|
| Composition adhésive | Rapport des monomères en % poids | à 20°C | à 60°C | à 80°C |
| SUBSTRAT : Tôle peinte | | | | |
| 25 E/VA/GMA | 68/27/5 | 3,4 | 0,4 | 0 |
| 26 E/VA/GMA + 0,5 % MDBSn | 68/27/5 | 3,2 | 0,6 | 0,2 |
| SUBSTRAT : Verre | | | | |
| 27 E/VA/GMA | 68/27/5 | 3,2 | 0,5 | 0 |
| 28 E/VA/GMA + 0,5 % MDBSn | 68/27/5 | 2,4 | 1,3 | 0,3 |
| SUBSTRAT : Tôle d'acier nue | | | | |
| 29 E/VA/GMA | 68/27/5 | 3,3 | 0,4 | 0 |
| 30 E/VA/GMA + 0,5 % MDBSn | 68/27/5 | 3,5 | 1,0 | 0,3 |
| SUBSTRAT : Tôle revêtue cataphorèse | | | | |
| 31 E/VA/GMA | 68/27/5 | 3,3 | 0,2 | 0 |
| 32 E/GMA + 0,5 % MDBSn | 68/27/5 | 3,0 | 0,5 | 0,1 |

**Revendications**

1. Composition adhésive à base de copolymère d'éthylène et d'ester d'hydroxyalkyle ou d'ester d'époxyalkyle caractérisée en ce qu'elle contient un composé organométallique de plomb, d'étain ou de titane.

2. Composition selon la revendication 1 caractérisée en ce que le composé organométallique est choisi parmi les sels d'acides organiques.

3. Composition selon l'une des revendications 1 à 2 caractérisée en ce que le sel d'acide est choisi parmi les sels des acides organiques contenant jusqu'à 25 atomes de carbone.

4. Composition selon l'une des revendications 1 à 3 caractérisée en ce que le composé organométallique est choisi parmi les produits de bas poids moléculaire.

5. Composition selon l'une des revendications 1 à 4 caractérisée en ce que le composé organométallique est choisi parmi le diacétate de dibutylétain, le dilaurate de dibutylétain, l'octoate de plomb, le stéarate de plomb, le stéarate d'étain.

6. Composition selon la revendication 1 caractérisée en ce que le composé organométallique est choisi parmi les produits de formule $Ti(OR)_4$ dans laquelle les radicaux R, identiques ou différents, représentent l'hydrogène ou un radical hydrocarboné contenant de 1 à 18 atomes de carbone.

7. Composition selon l'une des revendications 1 à 6 caractérisée en ce que'elle contient de 0,05 à 5 pour cent en poids du composé organométallique par rapport au copolymère.

8. Composition adhésive à base de copolymère d'éthylène et d'ester d'hydroxyalkyle ou d'ester d'époxyalkyle selon l'une des revendications 1 à 7 caractérisée en ce qu'on associe un copolymère d'éthylène et d'acrylate ou méthacrylate d'hydroxyalkyle ou d'époxyalkyle au composé organométallique.

9. Composition selon la revendication 8 caractérisée en ce que le copolymère est à base également d'un tiers monomère polymérisable éthyléniquement insaturé.

10. Composition selon la revendication 9 caractérisée en ce que le tiers monomère est l'acétate de vinyle ou l'acrylate d'éthyle.

11. Composition selon l'une des revendications 8 à 10 caractérisée en ce que le copolymère contient de 0,5 à 40 pour cent en poids de produit de polymérisation de l'acrylate ou du méthacrylate d'hydroxyalkyle ou d'époxyalkyle.

12. Composition selon l'une des revendications 1 à 11 caractérisée en ce qu'elle est mise en oeuvre par mélange du copolymère et du composé organométallique à une température comprise entre la température ambiante et 300°C.